# EUROPÄISCHE PATENTSCHRIFT

(11) **EP 2 924 479 B1**
(45) Veröffentlichungstag und Bekanntmachung des Hinweises auf die Patenterteilung: **28.12.2022**
(21) Anmeldenummer: 15157564.4
(22) Anmeldetag: 04.03.2015
(51) Int. Cl.: G02B 6/00, F21V 8/00, F21S 41/24, F21S 43/14, F21S 43/27, F21S 43/239, F21S 43/243, F21S 43/245, F21S 43/247, F21S 43/50

(54) **Fahrzeugscheinwerfer mit Lichtkopplungsschutz zwischen Lichtfunktionen**
Vehicle headlight with light coupling protection between light functions
Feu avant de véhicule avec protection de couplage optique entre des fonctions lumineuses

(30) Priorität: 04.03.2014 AT 501612014
(43) Veröffentlichungstag der Anmeldung: 30.09.2015
(73) Patentinhaber: ZKW Group GmbH, 3250 Wieselburg (AT)
(72) Erfinder: Berger, Martin, 3661 Artstetten (AT)
(74) Vertreter: Patentanwaltskanzlei Matschnig & Forsthuber OG

(56) Entgegenhaltungen:
- WO-A1-2013/069405
- DE-A1-102006 059 980
- DE-A1-102007 035 021
- JP-A- 2013 037 963
- US-A1- 2012 287 670

## Beschreibung

Die Erfindung betrifft einen Lichtkopplungsschutz für einen Fahrzeugscheinwerfer, wobei der Fahrzeugscheinwerfer eine mittlere Lichtleiteinheit sowie zumindest zwei äußere Lichtleiteinheiten aufweist, wobei jede Lichtleiteinheit zumindest eine Lichtauskopplungsfläche aufweist.

Moderne Fahrzeugscheinwerfer müssen häufig gestiegenen Anforderungen im Hinblick auf deren Funktionalität und Lichtbild genügen. Gleichzeitig werden Fahrzeugscheinwerfer zunehmend als wesentlicher Bestandteil eines Fahrzeugdesigns wahrgenommen, wodurch spezielle Bauformen erwünscht sind, die besondere technische Lösungen erfordern.

So weisen moderne Fahrzeugscheinwerfer häufig mehrere Lichtmodule auf, die für sich genommen oder im Zusammenwirken einzelne Lichtfunktionen übernehmen können. Diese Lichtmodule sind häufig in unmittelbarer Nähe zueinander angeordnet, wodurch das Problem besteht, dass unter gewissen Umständen Licht von einem Lichtmodul bzw. einer Lichtfunktion in ein benachbartes Lichtmodul bzw. eine andere Lichtfunktion in unerwünschter Weise einkoppelt. Dieses unerwünschte Einkoppeln kann Lichtfunktion beeinträchtigen oder in unerwünschter Weise aktivieren. Weiters kann dadurch die Sichtbarkeit der einzelnen Lichtfunktionen und somit die Verkehrssicherheit beeinträchtigt werden.

Ein beispielhafter Fahrzeugscheinwerfer aus dem Stand der Technik mit mehreren Lichtleitern für verschiedene Lichtfunktionen ist in der JP2013037963 offenbart.

Eine Aufgabe der Erfindung besteht daher darin, für einen Fahrzeugscheinwerfer eine Vorrichtung zu schaffen, die einen modularen Fahrzeugscheinwerferaufbau mit mehreren Lichtfunktionen ermöglicht, die unabhängig voneinander betrieben werden können ohne sich gegenseitig negativ zu beeinflussen.

Diese Aufgabe wird mit einem Lichtkopplungsschutz der eingangs genannten Art gelöst, bei welchem erfindungsgemäß die mittlere Lichtleiteinheit zumindest ein erstes und ein zweites Abdeckelement aufweist, wobei die Abdeckelemente die zumindest eine Lichtauskopplungsfläche der mittleren Lichtleiteinheit umgeben.

Der erfindungsgemäße Fahrzeugscheinwerfer ist in Anspruch 1 definiert. Weiter bevorzugte Ausgestaltungen sind in den abhängigen Ansprüchen definiert.

Dank der Erfindung ist es möglich einen Fahrzeugscheinwerfer zu schaffen, dessen Lichtfunktionen unabhängig voneinander betrieben werden können und keinen unerwünschten Kopplungseffekten unterliegen. Dadurch wird der Aufbau komplexer Lichtfunktionen effizient und kostengünstig ermöglicht. Die Abdeckelemente bestehen dabei aus einem lichtundurchlässigen Material und umgeben die zumindest eine Lichtauskopplungsfläche der mittleren Lichtleiteinheit in zumindest jenen Bereichen der mittleren Lichtleiteinheit, die bei einem Fehlen der Abdeckelemente Licht in umgebende Lichtleiteinheiten einkoppeln würden oder in die Licht von umgebenden Lichtleiteinheiten eingekoppelt werden könnte. Die Erfindung erlaubt eng aneinander liegende Lichtfunktionen scharf voneinander abzugrenzen. Die ist insbesondere bei Lichtfunktionen sinnvoll, die gleichzeitig aktiv sein können (Tagfahrlicht und Blinker) und in Form und Position eng beieinander angeordnet sind.

In einer Ausführungsform der Erfindung umschließen die Abdeckelemente die zumindest eine Lichtauskopplungsfläche der mittleren Lichtleiteinheit ringförmig. Die Abdeckelemente sind in dieser Ausführungsform seitlich um die Lichtauskopplungsfläche angeordnet , sodass die Lichtauskopplungsfläche durch die Abdeckelemente begrenzt wird. Unter dem Begriff "ringförmig" wird darin nicht eine kreisrunde Anordnung der Abdeckelemente verstanden, vielmehr soll damit ausgedrückt werden, dass die Abdeckelemente die Lichtauskopplungsfläche seitlich dergestalt begrenzen, sodass die Begrenzung in sich geschlossen ist. So kann eine der Lichtauskopplungsfläche gegenüberliegende Lichteinkopplungsfläche vorgesehen sein, wobei die beiden Flächen durch die Abdeckelemente voneinander beabstandet sein können. Somit können Einkopplungen in oder Auskopplungen aus der mittleren Lichtleiteinheit besonders effizient und einfach vermieden werden.

In einer besonders einfachen und kostengünstigen Weiterbildung der Erfindung weist die mittlere Lichtleiteinheit genau zwei Abdeckelemente auf. Alternativ dazu können auch mehrere Abdeckelemente vorgesehen sein.

Gemäß einer besonders robusten und effizienten Ausgestaltung der Erfindung kann das erste Abdeckelement im Wesentlichen L-förmig ausgebildet sein. Insbesondere kann es vorgesehen sein, dass das erste Abdeckelement zwei Schenkel aufweist, wobei beide Schenkel die Lichtauskopplungsfläche der mittleren Lichtleiteinheit überragen, wodurch eine besonders stabile Befestigung des ersten Abdeckelements an der mittleren Lichtleiteinheit ermöglicht wird. In einer alternativen Ausführungsform können die Schenkel einen Winkel einschließen, der deutlich von einem rechten Winkel abweicht. So kann zwischen den Schenkel ein stumpfer oder ein spitzer Winkel eingeschlossen sein. Die Winkel können beispielhaft zwischen 120° und 30°, bevorzugt im Wesentlichen 120°, 100°, 90°, 80°, 60°, 45°, oder 30° betragen. Auch kann der Bereich, in welchem die beiden Schenkel aufeinander treffen, abgerundet sein. Wesentlich ist, dass das Zusammenwirken aller Abdeckelemente ein enges und sicheres umschließen der zu umschließenden Lichtfunktionen ermöglicht, sodass eine unerwünschte Ein- und Auskopplung von Licht unterbunden werden kann.

In einer Weiterbildung der Erfindung kann das erste Abdeckelement im Wesentlichen oberhalb der Lichtauskopplungsfläche der mittleren Lichtleiteinheit angeordnet sein, wodurch eine einfache Montage des ersten Abdeckelements ermöglicht wird. Richtungsund Positionsangaben beziehen sich im Rahmen dieser Beschreibung, sofern nicht anders angegeben, grundsätzlich auf einen Fahrzeugscheinwerfer im in einem Fahrzeug eingebauten Zustand.

Um eine besonders einfache Anbringung des zweiten Abdeckelements zu ermöglichen, kann in einer vorteilhaften Ausgestaltung der Erfindung vorgesehen sein, dass das zweite Abdeckelement im Wesentlichen J-förmig ausgebildet ist. Insbesondere kann es vorgesehen sein, dass das zweite Abdeckelement unterhalb der mittleren Lichtleiteinheit angeordnet ist, wodurch die Montage des zweiten Abdeckelements zusätzlich erleichtert wird. In einer alternativen Ausführungsform können die Schenkel einen Winkel einschließen, der deutlich von einem rechten Winkel abweicht. So kann zwischen den Schenkel ein stumpfer oder ein spitzer Winkel eingeschlossen sein. Die Winkel können beispielhaft zwischen 120° und 30°, bevorzugt im Wesentlichen 120°, 100°, 90°, 80°, 60°, 45°, oder 30° betragen. Auch kann der Bereich, in welchem die beiden Schenkel aufeinander treffen, abgerundet sein. Wesentlich ist, dass das Zusammenwirken aller Abdeckelemente ein enges und sicheres umschließen der zu umschließenden Lichtfunktionen ermöglicht, sodass eine unerwünschte Ein- und Auskopplung von Licht unterbunden werden kann.

In einer günstigen Variante der Erfindung sind die Lichtleiteinheiten jeweils aus zumindest einem Lichtleiter ausgebildet. Sie können jeweils aus genau einem, zwei oder mehreren Lichtleitern ausgebildet sein. Insbesondere kann es vorgesehen sein, dass die mittlere Lichtleiteinheit aus genau einem ersten Lichtleiter ausgebildet ist. Es ist dabei von besonderer Bedeutung, dass sämtliche Lichtleiter bzw. Lichtleiteinheiten möglichst exakt positioniert werden, sodass Ungenauigkeiten und dadurch hervorgerufene Veränderungen des Lichtbildes der Lichtleiter weitestgehend vermieden werden.

Um eine besonders robuste und kostengünstige mechanische Verbindung des ersten Abdeckelements mit der mittleren Lichtleiteinheit zu ermöglichen, kann es vorgesehen sein, dass die mittlere Lichtleiteinheit einen von den Abdeckelementen umgebenen ersten Lichtleiter aufweist, wobei der erste Lichtleiter zumindest eine Lichteinkopplungsfläche, die zumindest eine Lichtauskopplungsfläche und zumindest drei Vertiefungen jeweils in Form eines Langloches aufweist, wobei die zumindest drei Vertiefungen an einer dem ersten Abdeckelement zugewandten Oberseite des ersten Lichtleiters angeordnet sind und das erste Abdeckelement zu den Langlöchern korrespondierende Positionierstifte aufweist. Zusätzlich oder alternativ dazu kann es vorgesehen sein, dass die mittlere Lichtleiteinheit einen von den Abdeckelementen umgebenen ersten Lichtleiter aufweist, wobei der erste Lichtleiter zumindest eine Lichteinkopplungsfläche, die zumindest eine Lichtauskopplungsfläche und zumindest drei Vertiefungen jeweils in Form eines Langloches aufweist, wobei die zumindest drei Vertiefungen an einer dem zweiten Abdeckelement zugewandten Unterseite des ersten Lichtleiters angeordnet sind und das zweite Abdeckelement zu den Langlöchern korrespondierende Positionierstifte aufweist. Vorzugsweise weisen das erste und das zweite Abdeckelement zu Langlöchern korrespondierende Positionierstifte auf, wodurch diese besonders positionsstabil und exakt an der mittleren Lichtleiteinheit positioniert werden können. In einer alternativen Ausführungsform der Erfindung können die Positionierstifte ebenso in umgekehrter Weise an den Lichtleitern angeordnet sein, wobei die Abdeckelemente die dazu korrespondierenden Langlöcher aufweisen.

Um die Montage weiter zu vereinfachen und die Position des Abdeckelemente zusätzlich zu stabilisieren, ist in einer Weiterbildung der Erfindung vorgesehen, dass zumindest zwei der Langlöcher quer zueinander orientiert sind, wobei sich jeweils ein Langloch in einem Endbereich des ersten Lichtleiters befindet und ein Langloch in einem Mittenbereich des ersten Lichtleiters angeordnet ist. So kann das jeweilige Abdeckelement rasch mit einem ersten und einem zweiten Langloch verbunden bzw. hierfür verschoben werden, wobei eine Verbindung mit dem verbleibenden dritten Loch die Endposition des Abdeckelements eindeutig und stabil festlegt.

Gemäß einem weiteren Aspekt der Erfindung weist eine Unterseite des ersten Lichtleiters zumindest einen, vorzugsweise zwei Längsstege auf, wodurch der erste Lichtleiter besonders positionsgenau in Bezug auf umgebende Bauteile sowie einfach und stabil an einem tragenden Rahmen mit korrespondierenden Ausnehmungen befestigt werden kann.

Um eine Lichtkopplung zwischen weiteren, die mittlere Lichtleiteinheit umgebenden Lichtmodulen bzw. Lichtleiteinheiten zu verhindern, kann es vorgesehen sein, dass sich das erste Abdeckelement in horizontaler Richtung nach innen über den ersten Lichtleiter hinaus erstreckt.

In einer günstigen Ausgestaltung der Erfindung weist das erste Abdeckelement an einem dem zweiten Abdeckelement zugewandten Schenkel eine Nut auf, wobei das zweite Abdeckelement in einem diesem Schenkel zugewandten Bereich eine korrespondierende Steckleiste aufweist. Dies erlaubt eine einfache und robuste mechanische Verbindung der beiden Abdeckelemente.

In einer vorteilhaften Ausführungsform der Erfindung können die die Abdeckelemente aus einem Elastomer gebildet sein. Elastomere sind als Material für Abdeckelemente besonders gut geeignet, da solcherart gebildete Abdeckelemente an jeweiligen Lichtleiteinheiten bzw. Lichtleitern aufgrund deren Flexibilität einfach angebracht und an beliebige Formen angepasst werden können. Zudem können Abdeckelemente aus elastomeren Material Vibrationen besonders gut dämpfen bzw. aufnehmen und somit die Lebensdauer von Fahrzeugscheinwerfern erhöhen. Insbesondere kann Ethylen-Propylen-Dien-Kautschuk als Elastomer verwendet werden, wobei die Shore-A Härte vorzugsweise Werte zwischen 15 und 25, insbesondere 20 beträgt.

Ein weiterer Aspekt der Erfindung betrifft einen Fahrzeugscheinwerfer mit zumindest einem erfindungsgemäßen Lichtkopplungsschutz.

In einer günstigen Ausbildung der Erfindung weist der Fahrzeugscheinwerfer eine mithilfe der mittleren Lichtleiteinheit gebildete Blinklichteinheit sowie eine oberhalb und eine unterhalb der Blinklichteinheit angeordnete mithilfe jeweils einer äußeren Lichtleiteinheit gebildete Tagfahrlichteinheit auf, wobei zumindest ein Leuchtstab, vorzugsweise jeweils ein Leuchtstab dazu eingerichtet ist, an der Rückseite jeder Lichtleiteinheit Licht in die jeweilige Lichtleiteinheit einzukoppeln.

Um eine Einkopplung von Licht unterschiedlicher Leuchtstäbe vorzubeugen, ist in einer günstigen Ausführungsform der Erfindung vorgesehen, dass sich die Abdeckelemente jeweils zumindest bis hin zu dem nächstgelegenen Leuchtstab erstrecken.

Die Erfindung samt weiteren Ausgestaltungen und Vorteilen ist im Folgenden an Hand einer beispielhaften, nicht einschränkenden Ausführungsform näher erläutert, die in den Figuren veranschaulicht ist. Hierbei zeigt
Fig. 1 eine Ansicht eines erfindungsgemäßen Lichtkopplungsschutzes entgegen der Fahrtrichtung in einem Fahrzeugscheinwerfer,
Fig. 2 einen Ausschnitt B der Fig. 1,
Fig. 3 eine Schnittdarstellung des erfindungsgemäßen Lichtkopplungsschutzes gemäß der Schnittlinie AA aus Fig. 1,
Fig. 4 eine Vorderansicht auf einen der mittlere Lichtleiteinheit zugeordneten ersten Lichtleiter,
Fig. 5 eine Draufsicht auf eine Unterseite des ersten Lichtleiters gemäß Fig. 4,
Fig. 6 eine Schnittdarstellung eines Fahrzeugscheinwerfers ohne Lichtkopplungsschutz,
Fig. 7 eine Schnittdarstellung eines Fahrzeugscheinwerfers mit einer Ausführung des erfindungsgemäßen Lichtkopplungsschutzes,
Fig. 8 eine Draufsicht auf eine mittlere Lichtleiteinheit,
Fig. 8a eine Schnittdarstellung der mittleren Lichtleiteinheit gemäß Fig. 8,
Fig. 9 eine Vorderansicht der mittleren Lichtleiteinheit gemäß Fig. 8 und
Fig. 10 eine perspektivische Darstellung von Fahrzeugscheinwerferkomponenten mit einem erfindungsgemäßen Lichtkopplungsschutz.
Fig. 11 eine perspektivische Schnittdarstellung der mittleren Lichtleiteinheit gemäß Fig. 8,
Fig 11a eine weitere perspektivische Schnittdarstellung der mittleren Lichtleiteinheit gemäß Fig. 8,
Fig. 12a eine schematische, beispielhafte, alternative Lichtleiter- und Abdeckelementanordnung,
Fig. 12b eine andere schematische, beispielhafte, alternative Lichtleiter- und Abdeckelementanordnung.

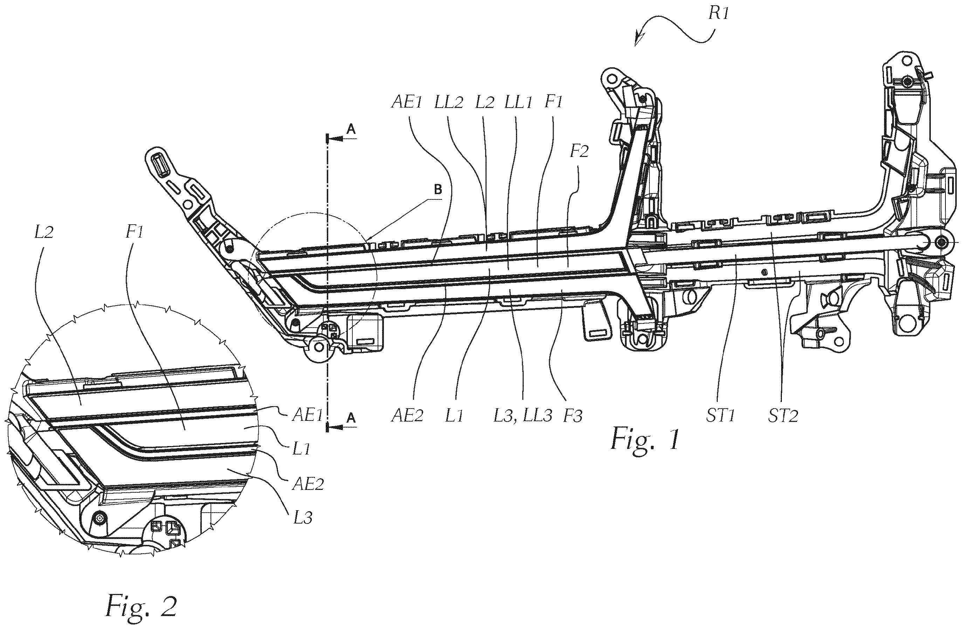

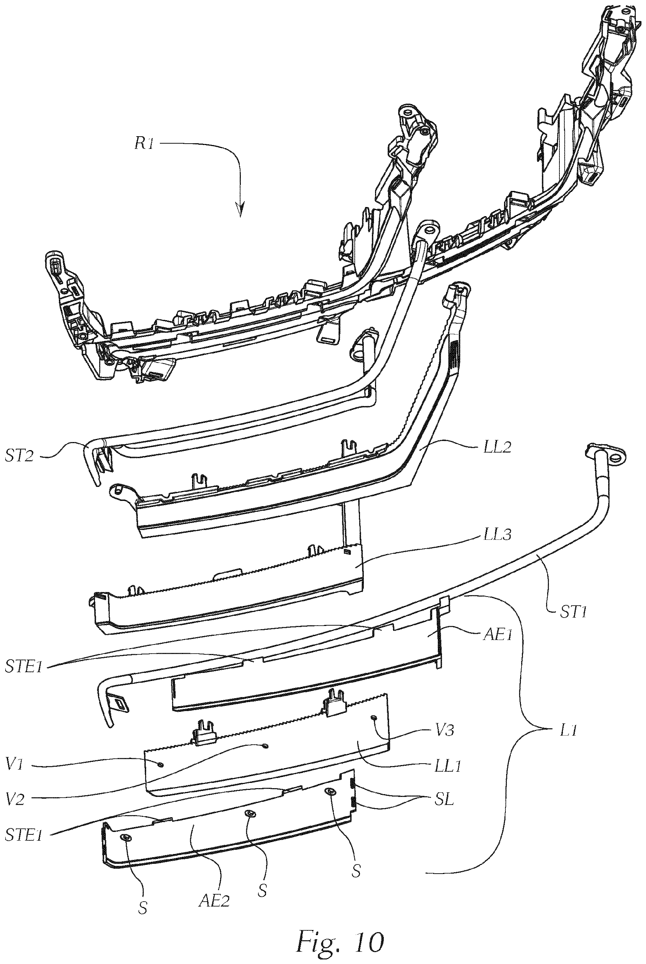

Fig. 1 zeigt Ansicht eines erfindungsgemäßen Lichtkopplungsschutzes entgegen der Fahrtrichtung in einem Fahrzeugscheinwerfer (es handelt sich dabei beispielhaft um den linken Fahrzeugscheinwerfer) bzw. Tragrahmen R1, wobei der Fahrzeugscheinwerfer bzw. dem Fahrzeugscheinwerfer zugehörige Komponenten nur teilweise dargestellt sind. Der Fahrzeugscheinwerfer weist darin eine mittlere Lichtleiteinheit L1 sowie zumindest zwei äußere Lichtleiteinheiten L2 und L3 auf, wobei jede Lichtleiteinheit L1, L2 bzw. L3 zumindest eine Lichtauskopplungsfläche F1, F2 bzw. F3 aufweist und die mittlere Lichtleiteinheit L1 ein erstes und ein zweites Abdeckelement AE1 und AE2 aufweist, wobei die Abdeckelemente AE1 und AE2 die zumindest eine Lichtauskopplungsfläche F1 der mittleren Lichtleiteinheit L1 umgeben. Die mittlere Lichtleiteinheit L1 weist in der in Fig. 1 dargestellten Ausführungsform genau einen ersten Lichtleiter LL1 auf. Alternativ dazu kann sie ebenso zwei oder mehrere Lichtleiter aufweisen. Die Abdeckelemente AE1 und AE2 bestehen in einer speziellen bevorzugten Ausführungsform aus einem biegsamen Elastomer, wodurch die Abdeckelemente AE1 und AE2 die mittlere Lichtleiteinheit L1 besonders passgenau umgeben können. Links (in Bezug auf die Fahrtrichtung; Achtung, die Richtungsangaben "links" und "rechts" beziehen sich auf eine vorwärts gerichtete Fahrtrichtung eines Fahrzeuges; durch Umkehrung der Perspektive in den Fig. 1, 2, 4, 8, 8a, 9, 10 und 11 entspricht die Richtungsangabe "links" der Richtungsangabe "rechts" in der Blattebene dieser Figuren; natürlich gilt dies für die Richtungsangabe "rechts" in analoger Weise) von der mittleren Lichtleiteinheit L1 sind ein erster und ein zweiter Leuchtstab ST1 und ST2 dargestellt, wobei der erste Leuchtstab ST1 dazu eingerichtet ist, Licht in den ersten Lichtleiter LL1 einzukoppeln. Der zweite Leuchtstab ST2 ist in analoger Weise dazu eingerichtet, Licht in einen zweiten und einen dritten Lichtleiter LL2 und LL3 einzukoppeln, wobei der zweite Leuchtstab ST2 hierzu vorzugsweise einstückig ausgeführt ist und aus zwei zueinander parallelen Schenkeln besteht, die über einen U-förmigen Abschnitt miteinander verbunden sind, wie dies in Fig. 10 erkennbar ist. Das erste Abdeckelement AE1 ist darin im Wesentlichen oberhalb des ersten (mittleren) Lichtleiters LL1 bzw. der ersten Lichtauskopplungsfläche F1 angeordnet und L-förmig ausgebildet. Dabei weist das erste Abdeckelement AE1 zwei Schenkel auf, wobei beide Schenkel die erste Lichtauskopplungsfläche F1 der mittleren Lichtleiteinheit LE1 überragen. Der Ausdruck "im Wesentlichen oberhalb" ist daher so zu verstehen, dass das erste Abdeckelement AE1 großteils oberhalb der ersten Lichtauskopplungsfläche F1 zu liegen kommt, wobei einzelne Bereiche des ersten Abdeckelements AE1 auch seitlich neben der ersten Lichtauskopplungsfläche F1 angeordnet sein können. Das zweite Abdeckelement AE2 ist im Wesentlichen J-förmig ausgebildet und unterhalb des ersten Lichtleiters LL1 bzw. der ersten Lichtauskopplungsfläche F1 angeordnet, wobei die beiden Abdeckelemente AE1 gemeinsam den ersten Lichtleiter LL1 ringförmig umschließen.

Fig. 2 zeigt einen Ausschnitt B der Fig. 1, der eine detaillierte Darstellung eines rechten Bereichs des Lichtkopplungsschutzes zeigt. Im Rahmen dieser Offenbarung bezeichnen gleiche Bezugszeichen gleiche Merkmale, sofern dies nicht ausdrücklich anders angegeben ist. Das erste Abdeckelement AE1 überragt darin die erste Lichtauskopplungsfläche F1 nach rechts bzw. nach innen, also hin zu einer Fahrzeuginnenseite (es handelt sich, wie bereits erwähnt, im gezeigten Beispiel um die Komponenten eines linken Fahrzeugscheinwerfers, bei einem rechten Fahrzeugscheinwerfer wäre der Ausdruck "innen" mit links gleichzusetzen), und verhindert dadurch zusätzlich eine Lichtkopplung zwischen den beiden äußeren Lichtleiteinheiten L2 und L3.

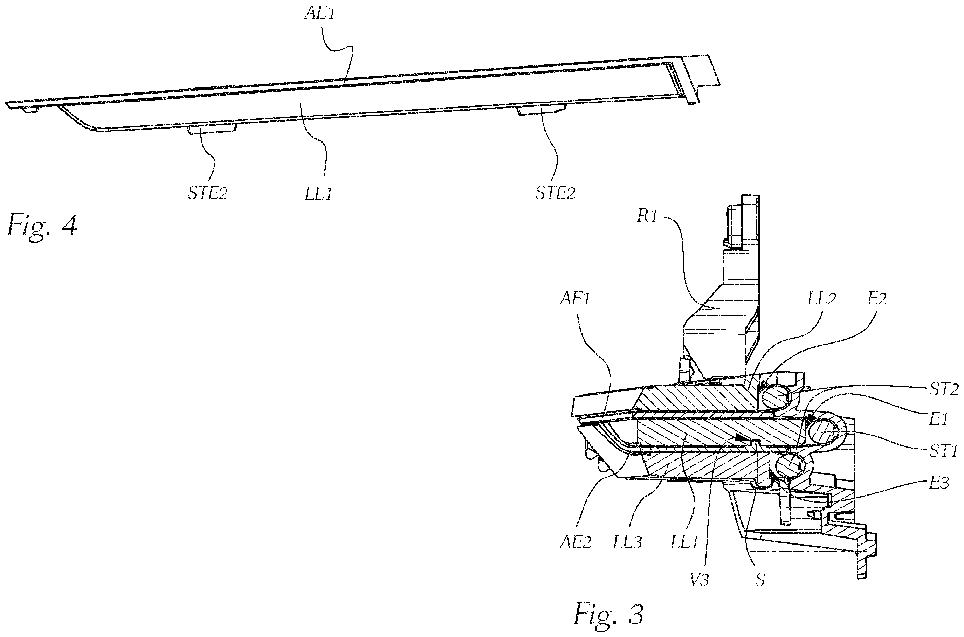

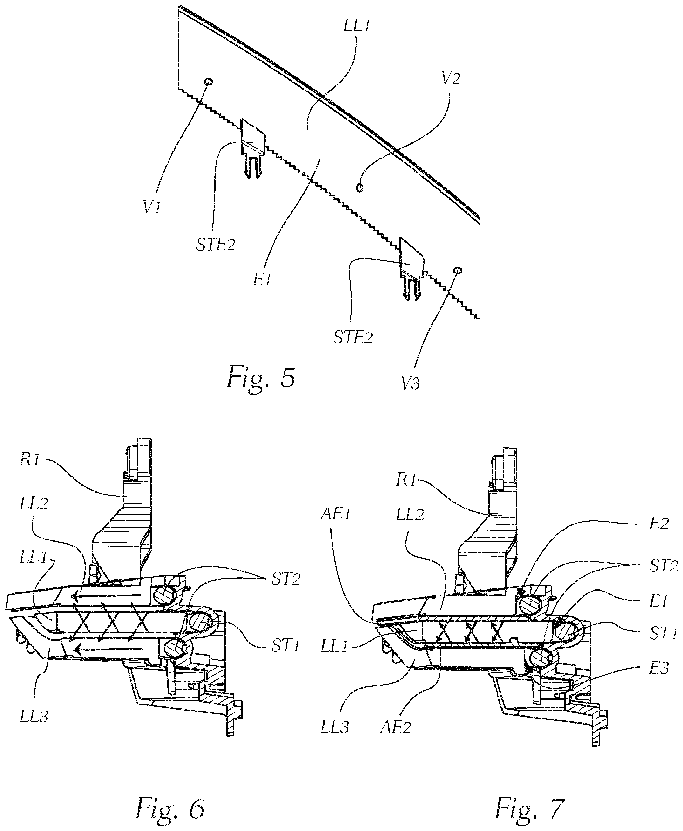

Fig. 3 zeigt eine Schnittdarstellung des erfindungsgemäßen Lichtkopplungsschutzes gemäß der Schnittlinie AA aus Fig. 1, wobei die Schnittebene so gewählt ist, dass ein Positionierstift S des zweiten Abdeckelements AE2 erkennbar ist. So ist es in der dargestellten Ausführungsform des erfindungsgemäßen Lichtkopplungsschutzes vorgesehen, dass die mittlere Lichtleiteinheit L1 genau einen von den Abdeckelementen AE1 umgebenen ersten Lichtleiter LL1 aufweist, wobei der erste Lichtleiter LL1 zumindest eine Lichteinkopplungsfläche E1, die zumindest eine erste Lichtauskopplungsfläche F1 und zumindest drei Vertiefungen V1, V2 und V3 (siehe Fig. 5) jeweils in Form eines Langloches aufweist, wobei die zumindest drei Vertiefungen V1, V2, V3 jeweils an einer dem ersten Abdeckelement AE1 zugewandten Oberseite sowie an einer dem zweiten Abdeckelement AE2 zugewandten Unterseite des ersten Lichtleiters LL1 angeordnet sind. Das erste und das zweite Abdeckelement AE1 und AE2 weisen jeweils zu den Langlöchern korrespondierende Positionierstifte S auf, wobei in Fig. 3 ein Positionierstift S des zweiten Abdeckelements AE2 erkennbar ist, der in eine korrespondierende Vertiefung V3 des ersten Lichtleiters LL1 ragt. Die Langlöcher sind vorzugsweise nicht durchgängig sondern lediglich so tief, wie es für eine stabile Verbindung der Positionierstifte ST mit dem ersten Lichtleiter LL1 erfordert.

Fig. 4 zeigt eine Vorderansicht auf den der mittlere Lichtleiteinheit L1 zugeordneten ersten Lichtleiter LL1, wobei das zweite Abdeckelement AE2 nicht dargestellt ist, um so den Blick auf zwei Längsstege STE freizugeben, die an einer unteren Seite des ersten Lichtleiters LL1 angeordnet sind und zur Ausrichtung bzw. zur Befestigung an dem in Fig. 1 und 10 detaillierter dargestellten Tragrahmen R1 dienen. Der Tragrahmen R1 weist hierfür zu den Stegen STE korrespondierende Vertiefungen bzw. Führungen auf, in die die Stege STE eingesetzt werden können.

Fig. 5 zeigt eine Draufsicht auf eine Unterseite des Lichtleiters LL1 gemäß Fig. 4. Darin sind die drei Vertiefungen V1, V2 und V3 erkennbar, deren Funktion bereits im Rahmen der Beschreibung der Fig. 3 erörtert wurde. Das Langloch der Vertiefung V2 ist quer zu den beiden Langlöchern V1 und V3 orientiert und in einem Mittenbereich des ersten Lichtleiters LL1 angeordnet.

In Fig. 6 ist eine Schnittdarstellung eines Fahrzeugscheinwerfers ohne Lichtkopplungsschutz gezeigt. Die Problematik der Lichtkopplung, die bei derartigen nebeneinander angeordneten Lichtleitern LL1 bis LL3 besteht, ist darin beispielhaft skizziert. So treten in diesem gezeigten Beispiel Lichtstrahlen, die durch Pfeilsymbole repräsentiert sind, von dem ersten Lichtleiter LL1 in die beiden benachbarten Lichtleiter LL2 und LL3 über. Dies kann durch Vorsehen des erfindungsgemäßen Lichtkopplungsschutzes vermieden werden, wie dieser bereits in den vorgehenden sowie nachfolgenden Figuren beispielhaft dargestellt wird, wobei die Fig. 7 den gleichen Fahrzeugscheinwerfer wie Fig. 6 zeigt, der allerdings im Gegensatz zur Fig. 6 nunmehr mit dem erfindungsgemäßen Lichtkopplungsschutz ausgestattet wurde. Die Lichtstrahlen innerhalb des ersten Lichtleiters LL1 treten darin nicht in die umgebenden Lichtleiter LL2 oder LL3 über. Auch ein Übergang von den beiden äußeren Lichtleitern LL2 und LL3 zueinander oder in den ersten Lichtleiter LL1 wird durch den Lichtkopplungsschutz bzw. die Abdeckelemente AE1 und AE2 verhindert.

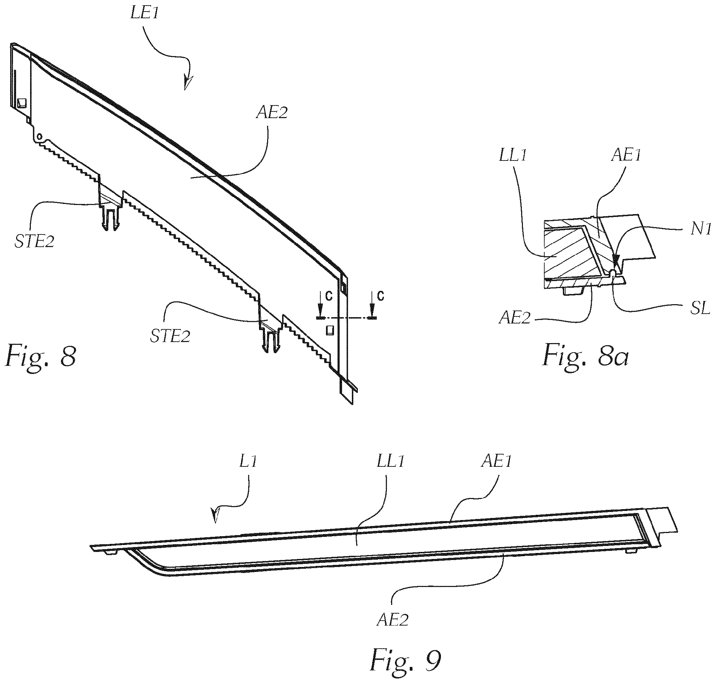

Fig. 8 zeigt eine Draufsicht auf die mittlere Lichtleiteinheit LE1, die einen Lichtleiter LL1 sowie die zwei Abdeckelemente AE1 und AE2 aufweist. Fig. 8a zeigt eine Schnittdarstellung der mittleren Lichtleiteinheit LE1 gemäß der Schnittline CC in Fig. 8. Um einen besonders robusten und rüttelfesten Lichtkopplungsschutz zu erhalten, weist das erste Abdeckelement AE1 an einem dem zweiten Abdeckelement AE2 zugewandten Schenkel eine Nut N1 auf, wobei eine an dem zweiten Abdeckelement AE2 angeordnete korrespondierende Steckleiste SL zum Eingriff in die Nut N1 ausgelegt ist. Alternativ dazu könnte die Nut N1 auch an dem zweiten Abdeckelement AE2 angeordnet sein und das erste Abdeckelement AE1 eine korrespondierende Steckleiste SL aufweisen.

Fig. 9 zeigt eine Vorderansicht der mittleren Lichtleiteinheit gemäß Fig. 8, wobei das erste Abdeckelement AE1 das zweite Abdeckelement AE2 in einem linken (an einer Fahrzeugaußenseite liegenden) vorderseitigen Bereich des Abdeckelements AE1 überragt (im Gegensatz zu einem mittleren und hinteren linken Bereich des Abdeckelements AE1, der gemäß Fig. 8a auf das zweite Abdeckelement AE2 aufsetzt).

Fig. 10 zeigt eine perspektivische Darstellung von Fahrzeugscheinwerferkomponenten (die im gezeigten Beispiel einem linken Fahrzeugscheinwerfer zugehörig sind) mit einem erfindungsgemäßen Lichtkopplungsschutz. Der Zusammenbau der dargestellten Komponenten erfolgt vorzugsweise in folgender Reihenfolge:
- Ein in Fig. 10 nicht dargestellter Kühlkörper wird an dem Tragrahmen R1 angebracht (alternativ dazu kann der Kühlkörper bereits im Tragrahmen R1 integriert sein),
- ein dem ersten Lichtleiter LL1 zugeordneter Leuchtstab ST1 (der im gezeigten Beispiel eine Blinklichtfunktion erfüllt) wird auf den Tragrahmen R1 angebracht,
- das erste und das zweite Abdeckelement AE1 und AE2 wird auf den ersten Lichtleiter LL1 angebracht,
- die durch Zusammenbau der des ersten Lichtleiters LL1 mit den beiden Abdeckelementen AE1 und AE2 entstandene erste Lichtleiteinheit L1 werden in den Tragrahmen R1 angebracht (vor dem dem ersten Lichtleiter LL1 zugeordneten Leuchtstab ST1),
- ein den äußeren bzw. zweiten und dritten Lichtleitern LL2 und LL3 zugeordneter Leuchtstab ST2 (der im gezeigten Beispiel eine Tagfahrlichtfunktion erfüllt) wird in auf den Tragrahmen R1 angebracht,
- die äußeren bzw. zweiten und dritten Lichtleiter LL2 und LL3 werden an dem Tragrahmen R1 angebracht (vor dem den äußeren Lichtleitern LL2 und LL3 zugeordneten Leuchtstab ST2),
- der Tragrahmen R1 wird mitsamt den daran angebrachten Komponenten ein Scheinwerfergehäuse eingebracht.

Das Anbringen (bzw. Einbringen) der Komponenten kann dabei beispielsweise durch Schieben, Rasten, Klemmen oder Verschrauben erfolgen.

Wird ein Fahrzeugscheinwerfer mit diesen Fahrzeugscheinwerferkomponenten bestückt, so ist dieser dazu geeignet im Betrieb mehrere Lichtfunktionen unabhängig und kopplungsfrei zu betreiben. So führt eine aktivierte Tagfahrlichtfunktion seitens der äußeren Lichtleiter LL2 und LL3 nicht zu einem Aufleuchten des benachbarten, eine Blinklichtfunktion übernehmenden ersten Lichtleiters LL1 oder umgekehrt.

Ein solcherart gebildeter Fahrzeugscheinwerfer weist also eine mithilfe der mittleren (ersten) Lichtleiteinheit L1 gebildete Blinklichteinheit sowie eine oberhalb und eine unterhalb der Blinklichteinheit angeordnete mithilfe jeweils einer äußeren Lichtleiteinheit L1 und L2 gebildete Tagfahrlichteinheit auf, wobei zumindest ein Leuchtstab ST1 oder ST2, vorzugsweise jeweils ein Leuchtstab dazu eingerichtet ist, an der Rückseite jeder Lichtleiteinheit L1, L2 und L3 Licht in die jeweilige Lichtleiteinheit, vorzugsweise über eine Lichteinkopplungsfläche E1, E2, E3 des jeweiligen Lichtleiters LL1, LL2 bzw. LL3 einzukoppeln. Wie eingangs erwähnt, beziehen sich Positionsangaben dabei auf den in einem Fahrzeug eingebauten Zustand. Unter einer Vorderseite ist daher der Bereich des Fahrzeugscheinwerfers zu verstehen, der vor einem Fahrzeug liegt, typischerweise eine Fahrbahn, wohingegen die Rückseite des Fahrzeugscheinwerfers dem Fahrzeug zugewandt ist.

Der Tragrahmen R1 gemäß der Fig. 10 ist dazu eingerichtet jeweils zwei Blinklichteinheiten bzw. jeweils zwei Tagfahrlichteinheiten pro Blinklichteinheit, also in Summe 4 Tagfahrlichteinheiten aufzunehmen.

Die Abdeckelemente AE1 sowie AE2 erstrecken sich jeweils zumindest bis hin zu dem nächstgelegenen Leuchtstab ST1 oder ST2, vorzugsweise zumindest bis hin zu dem der schützenden Lichtfunktion zugeordneten Leuchtstab ST1.

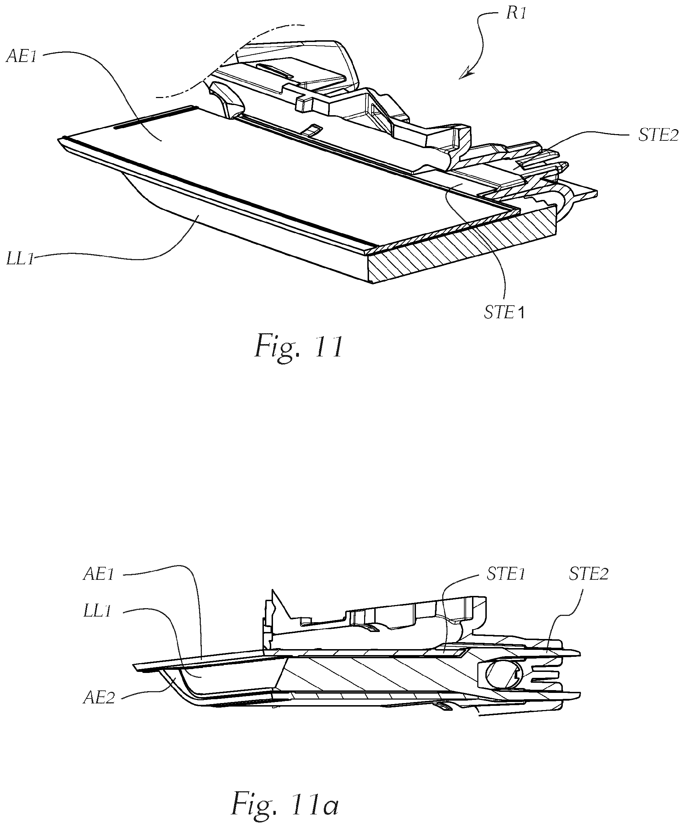

In Fig. 11 ist eine perspektivische Schnittdarstellung der mittleren Lichtleiteinheit gemäß Fig. 8 gezeigt. Darin sind zwei einander gegenüberliegende Stege STE erkennbar, die ebenso in einer korrespondierenden weiteren perspektivischen Schnittdarstellung gemäß Fig. 11a dargestellt sind. Ein Steg STE ist an dem ersten Abdeckelement AE1 angeordnet und dient zur präzisen Ausrichtung desselben an dem ersten Lichtleiter LL1. Zudem ist ein weiterer gegenüberliegender Steg STE dargestellt, der an der mittleren Lichtleiteinheit LE1 angeordnet ist und als Anschlagsmittel bei dem Einbau der mittleren Lichtleiteinheit LE1 in den Rahmen R1 dient. Damit kann die mittlere Lichtleiteinheit LE1 besonders positionsgenau in einem Fahrzeugscheinwerfer verbaut werden.

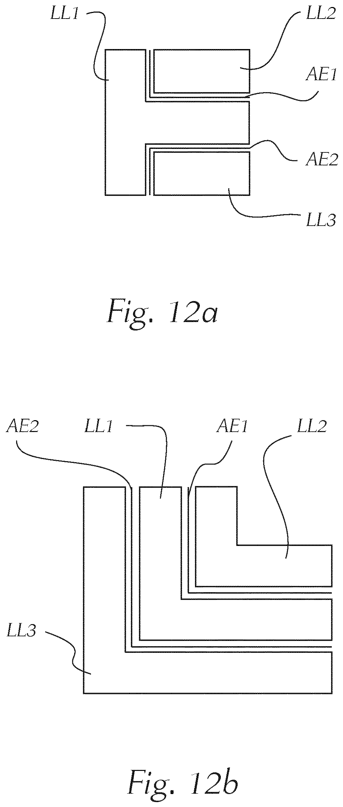

Die Form von Abdeckelementen kann in beliebiger Weise abgeändert werden, solange deren Funktion erfüllt werden kann. So können Lichtleiter in unterschiedlichster Weise gestaltet werden und nicht nur technischen sondern auch Designvorgaben genügen und dabei gleichzeitig kopplungsfrei angesprochen/angesteuert werden bzw. Licht abstrahlen. Die Anzahl der Abdeckelemente kann dabei an die gegebenen Anforderungen angepasst werden. Gleiches gilt für die Anzahl der Lichtleiter bzw. der Lichtleiteinheiten. In den Figuren 12a und 12b sind zwei beispielhafte alternative Lichtleiter- und Abdeckelementanordnungen in einer Vorderansicht schematisch dargestellt. Fig. 12a zeigt eine Anordnung, in welcher der erste Lichtleiter LL1 im Wesentlichen T-förmig ausgebildet ist, wobei der zweite und der dritte Lichtleiter LL2 und LL3 an jeweils einer Seite eines mittigen Schenkels des ersten Lichtleiters LL1 angeordnet sind. Die Abdeckelemente A1 und AE2 sind darin zumindest in den Übergängen zwischen den Lichtleitern LL1 und LL2 sowie LL1 und LL3 angeordnet und verhindern so eine unerwünschte Lichtkopplung zwischen den Lichtleitern. Fig. 12b zeigt wiederum eine Anordnung, in der sämtliche Lichtleiter LL1 bis LL3 im Wesentlichen L-förmig ausgebildet sind, wobei die Schenkel der einzelnen Lichtleiter LL1 bis LL3 parallel zueinander und fluchtend angeordnet sind. Die erste Lichtleiter LL1 ist dabei mittig angeordnet und von den zweiten und dritten Lichtleiter LL2 und LL3 umgeben. Zwischen dem Lichtleiter LL1 und LL2 sowie LL1 und LL3 sind ebenso Abdeckelemente AE1 und AE2 angeordnet, die in korrespondierender Weise im Wesentlichen L-förmig geformt sind.

Die Erfindung kann in beliebiger dem Fachmann bekannter Weise abgeändert werden und ist nicht auf die gezeigte Ausführungsform beschränkt. Auch können einzelne Aspekte der Erfindung aufgegriffen und weitgehend miteinander kombiniert werden. Wesentlich sind die der Erfindung zugrunde liegenden Gedanken, welche in Anbetracht dieser Lehre durch einen Fachmann in mannigfaltiger Weise ausgeführt werden können und trotzdem als solche aufrechterhalten bleiben.

## Patentansprüche

1. Fahrzeugscheinwerfer mit zumindest einem Lichtkopplungsschutz, wobei der Fahrzeugscheinwerfer eine mittlere Lichtleiteinheit (L1) sowie zumindest zwei äußere Lichtleiteinheiten (L2, L3) aufweist, wobei jede Lichtleiteinheit (L1, L2, L3) zumindest eine Lichtauskopplungsfläche (F1, F2, F3) aufweist, wobei die mittlere Lichtleiteinheit (L1) zumindest ein erstes und ein zweites Abdeckelement (AE1, AE2) aufweist, wobei die mittlere Lichtleiteinheit (L1) eine der Lichtauskopplungsfläche (F1) gegenüberliegende Lichteinkopplungsfläche aufweist, wobei die beiden Kopplungsflächen durch die Abdeckelemente voneinander beabstandet sind, wobei die Abdeckelemente (AE1, AE2) die zumindest eine Lichtauskopplungsfläche (F1) der mittleren Lichtleiteinheit (L1) ringförmig umschließen.

2. Fahrzeugscheinwerfer nach Anspruch 1, **dadurch gekennzeichnet, dass** die mittlere Lichtleiteinheit (L1) genau zwei Abdeckelemente (AE1, AE2) aufweist.

3. Fahrzeugscheinwerfer nach einem der Ansprüche 1 bis 2, **dadurch gekennzeichnet, dass** das erste Abdeckelement (AE1) im Wesentlichen L-förmig ausgebildet ist und die Lichtauskopplungsfläche (F1) der mittleren Lichtleiteinheit (L1) seitlich abdeckt.

4. Fahrzeugscheinwerfer nach einem der Ansprüche 1 bis 3, **dadurch gekennzeichnet, dass** das erste Abdeckelement (AE1) zwei Schenkel aufweist, wobei beide Schenkel die Lichtauskopplungsfläche (F1) der mittleren Lichtleiteinheit (L1) überragen.

5. Fahrzeugscheinwerfer nach einem der Ansprüche 1 bis 4, **dadurch gekennzeichnet, dass** das erste Abdeckelement (AE1) im Wesentlichen oberhalb der ersten Lichtauskopplungsfläche (F1) der mittleren Lichtleiteinheit (L1) angeordnet ist.

6. Fahrzeugscheinwerfer nach einem der Ansprüche 1 bis 5, **dadurch gekennzeichnet, dass** das zweite Abdeckelement (AE2) im Wesentlichen J-förmig ausgebildet ist und die Lichtauskopplungsfläche (F1) der mittleren Lichtleiteinheit (L1) seitlich abdeckt.

7. Fahrzeugscheinwerfer nach einem der Ansprüche 1 bis 6, **dadurch gekennzeichnet, dass** das zweite Abdeckelement (AE2) unterhalb der ersten Lichtauskopplungsfläche (F1) der mittleren Lichtleiteinheit (L1) angeordnet ist.

8. Fahrzeugscheinwerfer nach einem der Ansprüche 1 bis 7, **dadurch gekennzeichnet, dass** die Lichtleiteinheiten (L1, L2, L3) jeweils aus zumindest einem Lichtleiter (LL1, LL2, LL3) ausgebildet sind, wobei vorzugsweise die mittlere Lichtleiteinheit (L1) aus genau einem ersten Lichtleiter (LL1) ausgebildet ist.

9. Fahrzeugscheinwerfer nach Anspruch 8, **dadurch gekennzeichnet, dass** die mittlere Lichtleiteinheit (L1) einen von den Abdeckelementen (AE1, AE2) umgebenen ersten Lichtleiter (LL1) aufweist, wobei der erste Lichtleiter (LL1) zumindest eine Lichteinkopplungsfläche (E1), die zumindest eine Lichtauskopplungsfläche (F1) und zumindest drei Vertiefungen (V1, V2, V3) jeweils in Form eines Langloches aufweist, wobei die zumindest drei Vertiefungen (V1, V2, V3) an einer dem ersten Abdeckelement (AE1) zugewandten Oberseite des ersten Lichtleiters (LL1) angeordnet sind und das erste Abdeckelement (AE1) zu den Langlöchern korrespondierende Positionierstifte (S) aufweist.

10. Fahrzeugscheinwerfer nach Anspruch 8 oder 9, **dadurch gekennzeichnet, dass** die mittlere Lichtleiteinheit (L1) einen von den Abdeckelementen (AE1, AE2) umgebenen ersten Lichtleiter (LL1) aufweist, wobei der erste Lichtleiter (LL1) zumindest eine Lichteinkopplungsfläche (E1), die zumindest eine Lichtauskopplungsfläche (F1) und zumindest drei Vertiefungen (V1, V2, V3) jeweils in Form eines Langloches aufweist, wobei die zumindest drei Vertiefungen (V1, V2, V3) an einer dem zweiten Abdeckelement (AE2) zugewandten Unterseite des ersten Lichtleiters (LL1) angeordnet sind und das zweite Abdeckelement (AE2) zu den Langlöchern korrespondierende Positionierstifte (S) aufweist.

11. Fahrzeugscheinwerfer nach Anspruch 9 oder 10, **dadurch gekennzeichnet, dass** zumindest zwei der Langlöcher quer zueinander orientiert sind, wobei sich jeweils ein Langloch in einem Endbereich des ersten Lichtleiters (LL1) befindet und ein Langloch in einem Mittenbereich des ersten Lichtleiters (LL1) angeordnet ist.

12. Fahrzeugscheinwerfer nach einem der Ansprüche 8 bis 11, **dadurch gekennzeichnet, dass** eine Unterseite des ersten Lichtleiters (LL1) zumindest einen, vorzugsweise zwei Längsstege (STE2) aufweist.

13. Fahrzeugscheinwerfer nach einem der Ansprüche 8 bis 12, **dadurch gekennzeichnet, dass** sich das erste Abdeckelement (AE1) in horizontaler Richtung nach innen über den ersten Lichtleiter (LL1) hinaus erstreckt.

14. Fahrzeugscheinwerfer nach einem der Ansprüche 1 bis 13, **dadurch gekennzeichnet, dass** das erste Abdeckelement (AE1) an einem dem zweiten Abdeckelement (AE2) zugewandten Schenkel eine Nut (NT1) aufweist, und das zweite Abdeckelement (AE2) in einem diesem Schenkel zugewandten Bereich eine korrespondierende Steckleiste (SL) aufweist.

15. Fahrzeugscheinwerfer nach einem der Ansprüche 1 bis 14, **dadurch gekennzeichnet, dass** die Abdeckelemente (AE1, AE2) aus einem Elastomer gebildet sind.

16. Fahrzeugscheinwerfer nach einem der Ansprüche 1 bis 15, aufweisend eine mithilfe der mittleren Lichtleiteinheit (L1) gebildete Blinklichteinheit sowie eine oberhalb und eine unterhalb der Blinklichteinheit angeordnete mithilfe jeweils einer äußeren Lichtleiteinheit (L2, L3) gebildete Tagfahrlichteinheit, wobei zumindest ein Leuchtstab (ST1, ST2), vorzugsweise jeweils ein Leuchtstab dazu eingerichtet ist, an der Rückseite jeder Lichtleiteinheit (L1, L2, L3) Licht in die jeweilige Lichtleiteinheit (L1, L2, L3) einzukoppeln, wobei sich besonders bevorzugt die Abdeckelemente (AE1, AE2) jeweils zumindest bis hin zu dem nächstgelegenen Leuchtstab (ST1, ST2) erstrecken.

## Claims

1. Vehicle headlamp with at least one light coupling protection, the vehicle headlamp having a central light guide unit (L1) and at least two outer light guide units (L2, L3), each light guide unit (L1, L2, L3) having at least one light output surface (F1, F2, F3), the central light guide unit (L1) having at least a first and a second cover element (AE1, AE2), the central light guide unit (L1) having a light coupling-in surface opposite the light decoupling surface (F1), the two coupling surfaces being spaced apart from one another by the cover elements, the cover elements (AE1, AE2) surrounding the at least one light decoupling surface (F1) of the central light guide unit (L1) in an annular manner.

2. Vehicle headlamp according to claim 1, **characterized in that** the central light guide unit (L1) has exactly two cover elements (AE1, AE2).

3. Vehicle headlamp according to one of Claims 1 to 2, **characterized in that** the first cover element (AE1) is of essentially L-shaped design and laterally covers the light extraction surface (F1) of the central light guide unit (L1).

4. Vehicle headlamp according to one of Claims 1 to 3, **characterized in that** the first cover element (AE1) has two limbs, both limbs projecting beyond the light extraction surface (F1) of the central light guide unit (L1).

5. Vehicle headlamp according to one of claims 1 to 4, **characterized in that** the first cover element (AE1) is arranged essentially above the first light extraction surface (F1) of the central light guide unit (L1).

6. Vehicle headlamp according to one of claims 1 to 5, **characterized in that** the second cover element (AE2) is essentially J-shaped and laterally covers the light extraction surface (F1) of the central light guide unit (L1).

7. Vehicle headlamp according to one of claims 1 to 6, **characterized in that** the second cover element (AE2) is arranged below the first light extraction surface (F1) of the central light guide unit (L1).

8. Vehicle headlamp according to one of claims 1 to 7, **characterized in that** the light guide units (L1, L2, L3) are each formed from at least one light guide (LL1, LL2, LL3), preferably the central light guide unit (L1) being formed from precisely one first light guide (LL1).

9. Vehicle headlamp according to claim 8, **characterized in that** the central light guide unit (L1) has a first light guide (LL1) surrounded by the cover elements (AE1, AE2), the first light guide (LL1) having at least one light coupling-in surface (E1), the at least one light decoupling surface (F1) and at least three depressions (V1, V2, V3) each in the form of an elongated hole, the at least three depressions (V1, V2, V3) being arranged on an upper side of the first light guide (LL1) facing the first cover element (AE1), and the first cover element (AE1) having positioning pins (S) corresponding to the elongated holes.

10. Vehicle headlamp according to claim 8 or 9, **characterized in that** the central light guide unit (L1) has a first light guide (LL1) surrounded by the cover elements (AE1, AE2), the first light guide (LL1) having at least one light coupling-in surface (E1), the at least one light coupling-out surface (F1) and at least three depressions (V1, V2, V3), each in the form of an elongated hole, the at least three depressions (V1, V2, V3) being arranged on an underside of the first light guide (LL1) facing the second cover element (AE2), and the second cover element (AE2) having positioning pins (S) corresponding to the elongated holes.

11. Vehicle headlamp according to claim 9 or 10, **characterized in that** at least two of the elongated holes are oriented transversely with respect to one another, in each case one elongated hole being located in an end region of the first light guide (LL1) and one elongated hole being arranged in a central region of the first light guide (LL1).

12. Vehicle headlamp according to one of claims 8 to 11, **characterized in that** an underside of the first light guide (LL1) has at least one, preferably two, longitudinal webs (STE2).

13. Vehicle headlamp according to one of claims 8 to 12, **characterized in that** the first cover element (AE1) extends inwardly in the horizontal direction beyond the first light guide (LL1).

14. Vehicle headlamp according to one of claims 1 to 13, **characterized in that** the first cover element (AE1) has a groove (NT1) on a limb facing the second cover element (AE2), and the second cover element (AE2) has a corresponding plug-in strip (SL) in a region facing this limb.

15. Vehicle headlamp according to one of claims 1 to 14, **characterized in that** the cover elements (AE1, AE2) are formed from an elastomer.

16. Vehicle headlamp according to one of claims 1 to 15, having a flasher unit formed with the aid of the central light guide unit (L1) and a daytime running light unit arranged above and below the flasher unit, each formed with the aid of an outer light guide unit (L2, L3), at least one light rod (ST1, ST2), preferably in each case one light rod, is set up to couple light into the respective light guide unit (L1, L2, L3) at the rear side of each light guide unit (L1, L2, L3), the cover elements (AE1, AE2) extending in each case at least as far as the nearest light rod (ST1, ST2) in a particularly preferred manner.

## Revendications

1. Projecteur de véhicule avec au moins une protection contre le couplage de la lumière, le projecteur de véhicule présentant une unité de guidage de la lumière centrale (L1) ainsi qu'au moins deux unités de guidage de la lumière extérieures (L2, L3), chaque unité de guidage de la lumière (L1, L2, L3) présentant au moins une surface d'extraction de la lumière (F1, F2, F3), l'unité de guidage de la lumière centrale (L1) présentant au moins un premier et un deuxième élément de recouvrement (AE1, AE2), l'unité de guidage de lumière centrale (L1) présentant une surface de couplage de lumière opposée à la surface de découplage de lumière (F1), les deux surfaces de couplage étant espacées l'une de l'autre par les éléments de recouvrement, les éléments de recouvrement (AE1, AE2) entourant de manière annulaire la au moins une surface de découplage de lumière (F1) de l'unité de guidage de lumière centrale (L1).

2. Projecteur de véhicule selon la revendication 1, **caractérisé en ce que** l'unité de guidage de lumière centrale (L1) présente exactement deux éléments de recouvrement (AE1, AE2).

3. Projecteur de véhicule selon l'une des revendications 1 à 2, **caractérisé en ce que** le premier élément de recouvrement (AE1) est réalisé essentiellement en forme de L et recouvre latéralement la surface de découplage de la lumière (F1) de l'unité centrale de guidage de la lumière (L1).

4. Projecteur de véhicule selon l'une des revendications 1 à 3, **caractérisé en ce que** le premier élément de recouvrement (AE1) présente deux branches, les deux branches dépassant de la surface de découplage de lumière (F1) de l'unité de guidage de lumière centrale (L1).

5. Projecteur de véhicule selon l'une des revendications 1 à 4, **caractérisé en ce que** le premier élément de masquage (AE1) est disposé sensiblement au-dessus de la première surface d'extraction de lumière (F1) de l'unité centrale de guidage de lumière (L1).

6. Projecteur de véhicule selon l'une des revendications 1 à 5, **caractérisé en ce que** le deuxième élément de masquage (AE2) est sensiblement en forme de J et recouvre latéralement la surface de découplage de lumière (F1) de l'unité centrale de guidage de lumière (L1).

7. Projecteur de véhicule selon l'une des revendications 1 à 6, **caractérisé en ce que** le deuxième élément de recouvrement (AE2) est disposé en dessous de la première surface de découplage de lumière (F1) de l'unité centrale de guidage de lumière (L1).

8. Projecteur de véhicule selon l'une des revendications 1 à 7, **caractérisé en ce que** les unités de guidage de lumière (L1, L2, L3) sont formées chacune d'au moins un guide de lumière (LL1, LL2, LL3), l'unité de guidage de lumière centrale (L1) étant de préférence formée d'exactement un premier guide de lumière (LL1).

9. Projecteur de véhicule selon la revendication 8, **caractérisé en ce que** l'unité de guidage de lumière centrale (L1) présente un premier guide de lumière (LL1) entouré par les éléments de recouvrement (AE1, AE2), le premier guide de lumière (LL1) présentant au moins une surface de couplage de lumière (E1), au moins une surface de découplage de lumière (F1) et au moins trois renfoncements (V1, V2, V3) ayant chacune la forme d'un trou oblong, les au moins trois renfoncements (V1, V2, V3) étant disposés sur une face supérieure du premier guide de lumière (LL1) tournée vers le premier élément de recouvrement (AE1) et le premier élément de recouvrement (AE1) présentant des broches de positionnement (S) correspondant aux trous oblongs.

10. Projecteur de véhicule selon la revendication 8 ou 9, **caractérisé en ce que** l'unité de guidage de lumière centrale (L1) présente un premier guide de lumière (LL1) entouré par les éléments de recouvrement (AE1, AE2), le premier guide de lumière (LL1) présentant au moins une surface de couplage de lumière (E1), ladite au moins une surface de découplage de lumière (F1) et au moins trois cavités (V1, V2, V3) ayant chacune la forme d'un trou oblong, les au moins trois renfoncements (V1, V2, V3) étant disposés sur une face inférieure du premier guide de lumière (LL1) tournée vers le deuxième élément de recouvrement (AE2) et le deuxième élément de recouvrement (AE2) présentant des broches de positionnement (S) correspondant aux trous oblongs.

11. Projecteur de véhicule selon la revendication 9 ou 10, **caractérisé en ce qu'**au moins deux des trous oblongs sont orientés transversalement l'un par rapport à l'autre, un trou oblong se trouvant respectivement dans une zone d'extrémité du premier guide de lumière (LL1) et un trou oblong étant disposé dans une zone centrale du premier guide de lumière (LL1).

12. Projecteur de véhicule selon l'une quelconque des revendications 8 à 11, **caractérisé en ce qu'**une face inférieure du premier guide de lumière (LL1) comporte au moins une, de préférence deux, entretoises longitudinales (STE2).

13. Projecteur de véhicule selon l'une des revendications 8 à 12, **caractérisé en ce que** le premier élément de masquage (AE1) s'étend horizontalement vers l'intérieur au-delà du premier guide de lumière (LL1).

14. Projecteur de véhicule selon l'une des revendications 1 à 13, **caractérisé en ce que** le premier élément de masquage (AE1) présente une rainure (NT1) sur une branche tournée vers le deuxième élément de masquage (AE2), et le deuxième élément de masquage (AE2) présente une réglette enfichable (SL) correspondante dans une zone tournée vers cette branche.

15. Projecteur de véhicule selon l'une quelconque des revendications 1 à 14, **caractérisé en ce que** les éléments de recouvrement (AE1, AE2) sont formés d'un élastomère.

16. Projecteur de véhicule selon l'une quelconque des revendications 1 à 15, comprenant une unité de feu clignotant formée à l'aide de l'unité de guide de lumière centrale (L1), ainsi qu'une unité de feu diurne disposée au-dessus et une unité de feu diurne disposée en dessous de l'unité de feu clignotant, formées à l'aide d'une unité de guide de lumière extérieure respective (L2, L3), dans lequel au moins un bâton lumineux (ST1, ST2), de préférence un bâton lumineux à la fois, est conçu pour injecter de la lumière dans l'unité de guidage de lumière respective (L1, L2, L3) sur la face arrière de chaque unité de guidage de lumière (L1, L2, L3), les éléments de recouvrement (AE1, AE2) s'étendant de manière particulièrement préférée au moins jusqu'au bâton lumineux (ST1, ST2) le plus proche.
